# EUROPEAN PATENT SPECIFICATION

(11) **EP 1 780 947 B1**
(45) Date of publication and mention of the grant of the patent: **17.06.2009**
(21) Application number: 05292302.6
(22) Date of filing: 27.10.2005
(51) Int. Cl.: H04L 12/26

(54) **Data collection from network nodes in a telecommunication network**
Datensammeln von Netzknoten in einem Telekommunikationsnetz
Collecte des données des noeuds du réseau dans un réseau de télécommunications

(43) Date of publication of application: 02.05.2007
(73) Proprietor: Alcatel Lucent, 75008 Paris (FR)
(72) Inventor: Paparella, Andrea, 21052 Busto Arsizio (VA) (IT); Riglietti, Roberto, 20059 Vimercate (MI) (IT); Donadio, Pasquale, 80129 Napoli (IT)
(74) Representative: Colombo, Stefano Paolo

(56) References cited:
- EP-A- 0 698 862
- WO-A-01/55862
- US-A- 5 389 922

## Description

The present invention relates to a method for collecting data from network nodes in a telecommunication network. The present invention further relates to a network node and a network manager for implementing such a method and a telecommunication network wherein such a method is implemented.

A telecommunication network typically comprises a plurality of network nodes. Such network nodes are adapted to route and switch traffic flows across the network.

In a telecommunication network, network nodes are typically managed in a centralised way by a network manager. The network manager is adapted to collect information from nodes, and to perform proper actions on nodes according to such collected information. For instance, a network manager may collect performance information from nodes, and then it can act upon nodes so that performance is kept at an acceptable level. Besides, for instance, a network manager may collect configuration information relating to software versions in network nodes, and then it can distribute software updates to network nodes. And so on.

In the following description and in the claims, the expression "data set" will indicate a set of information collected by a network manager from a network node, independently from the type of collected information (performance information, configuration information, accounting information, backup, or the like) comprised in such a data set.

Collecting data in a telecommunication network may be performed in a centralised way, wherein each network node being connected (directly or through other network nodes) to the network manager. In this case, the network manager collects from each single node its respective data set through a dedicated management channel. For instance, in SDH ("Digital Synchronous Hierarchy") networks, such data sets are collected through a so-called Data Communication Channel (DCC).

However, in some cases, the dedicated channel bandwidth may be rather narrow (e.g., 176 kbit/s for the above DCC). In view of the fact that network nodes are becoming even more complex and they require an increasing amount of management information, the average size of data sets is increasing. As a consequence, collecting data sets from each of the network nodes through the DCC channel takes a very long time, and the overall data collection time may become unacceptable.

WO 01/55862 discloses a data mining and analysis method and system which can be implemented in an open architecture and use a multiple-tiered design to collect and analyse data relating to network devices in essentially real-time or near real-time. Analyser modules are implemented in a distributed, multi-layered manner and process log data in a distributed and hierarchical manner to reduce data transfer needed for reporting.

EP 0698862 discloses methods for compressing data character strings into "storage optimized indices" (SOIs) and stores their adaptive Ziv Lempel (AZL) indices, called "evolution based indices" (EBIs), in fields in corresponding entries in a SOI dictionary- The method also compresses data using the SOI dictionary, which accesses the corresponding EBIs for representing the compressed data.

US 5 389 922 discloses a dictionary initialisation scheme adaptive to changes in the type and structure of input data. The compression ratio is increased by minimizing the number of data entries used to represent single characters in the input data. By using fewer codes than what is normally used to represent characters in an array of input data, the dictionary can have fewer entries than the alphabet size.

An object of the present invention is providing a method for collecting data from network nodes in a telecommunication network which allows to reduce the overall data collection time in a network in comparison with the known methods.

The above and further objects are achieved by a method of collecting data according to claim 1, a network node according to claim 5, a network manager according to claim 9, and a telecommunication network according to claim 11. Further advantageous features of the present invention are set forth in the respective dependent claims. All the claims are deemed to be an integral part of the present description.

According to a first aspect, the present invention provides a method for collecting data from nodes of a telecommunication network, said network comprising a collecting node and an intermediate node, wherein it comprises the steps, which are performed by said intermediate node, of: receiving from said collecting node a first file comprising at least a first compressed data set and a first dictionary, said first dictionary comprising first entries biunivocally associating first symbols of said first compressed data set to respective byte sequences; from a data set to be collected from said intermediate node itself, generating a second file comprising at least a second compressed data set and a second dictionary, said second dictionary comprising second entries biunivocally associating second symbols of said second compressed data set to respective byte sequences; inserting the first compressed data set and the second compressed data set into an overall file; and merging said first dictionary and said second dictionary by inserting only once in a merging resulting dictionary entries comprised in at least one of said first dictionary and said second dictionary, said merging resulting dictionary being inserted into said overall file.

The above steps of receiving and generating can be performed in any order. In other words, the step of receiving could be performed before, after or at the same time as the step of generating.

Preferably, the step of generating a second file comprises a step of generating said second compressed data set by using at least one of said second entries which is stored in said intermediate node.

Preferably, it is inserted in said overall file a first header including an identifier of said collecting node and a second header including an identifier of said intermediate node.

Preferably, the overall file is forwarded according to routing information stored at said intermediate node.

According to a second aspect, the present invention provides a network node of a telecommunication network, wherein it comprises: receiving means for receiving a first file comprising at least a first compressed data set and a first dictionary, said first dictionary comprising first entries associating first symbols of said first compressed data set to respective byte sequences; a compression module for generating ,from a data set to be collected from said intermediate node itself, a second file comprising at least a second compressed data set and a second dictionary, said second dictionary comprising second entries associating second symbols of said second compressed data set to respective byte sequences; a merging module for inserting said first compressed data set and said second compressed data set into an overall file, and for merging said first dictionary and said second dictionary in said overall file by inserting only once in a merging resulting dictionary entries comprised in at least one of said first dictionary (DicA) and said second dictionary (DicB).

Advantageously, the compression module is further adapted to generate said second file according to at least one of said second entries which is stored at said network node.

Advantageously, the merging module is further adapted to insert in said overall file a header including an identifier of said network node.

The network node, preferably, comprises a forwarding module for forwarding said overall file according to routing information stored at said network node.

According to a third aspect, the present invention provides a network manager of a telecommunication network comprising: receiving means for receiving a file comprising a first compressed data set, a second compressed data set and a sequence of dictionary entries as generated by the compression module and the merging module of a network node as set forth above, said dictionary entries associating symbols of said first compressed data set and/or said second compressed data set to respective byte sequences; a decompression module for decompressing said first compressed data set and said second compressed data set according to said sequence of dictionary entries.

The decompression module is preferably further adapted to decompress said first compressed data set and said second compressed data set according to at least a further dictionary entry which is stored at said network manager.

According to a fourth aspect, the present invention provides a telecommunication network comprising a network node as set forth above and a network manager as set forth above.

The invention will become more clear by the following description, given by way of example and not of limitation, to be read with the accompanying drawings.

In the drawings:
- Figure 1 schematically shows a simplified telecommunication network which is adapted to implement the method of the invention;
- Figures 2a and 2b schematically show the structure of a node and the structure of the network manager of the network of Figure 1, respectively;
- Figure 3 shows a flow chart of some operations performed by the nodes of Figure 1;
- Figure 4 schematically shows the operation of the node NA of Figure 1;
- Figure 5 schematically shows the operation of the node NB of Figure 1;
- Figures 6a and 6b schematically show the structure of a node and the structure of the network manager of the network of Figure 1, respectively, according to a preferred embodiment of the present invention; and
- Figures 7a and 7b show an example of application of the method of the invention to a ring network.

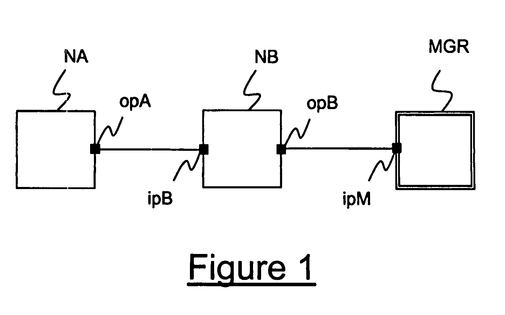

Figure 1 schematically shows a simplified telecommunication network wherein the network according to the present invention could be implemented and easily explained.

The network of Figure 1 comprises a node NA, a node NB connected to the node NA and a network manager MGR (for instance, the NOC of an SDH network), which is connected to the node NB.

Square markers indicate the input ports and the output ports of each node. For clarity reasons, Figure 1 only shows the input/output ports which are relevant to the present invention. In particular, the node NA has an output port opA, which is connected to an input port ipB of the node NB. Similarly, the node NB has an output port opB which is connected to an input port ipM of the network manager MGR.

The network of Figure 1 is only exemplary; indeed, the method of the invention can be applied to networks comprising any number of nodes, arranged according to any topology (bus, ring, mesh), as it will be shown herein after.

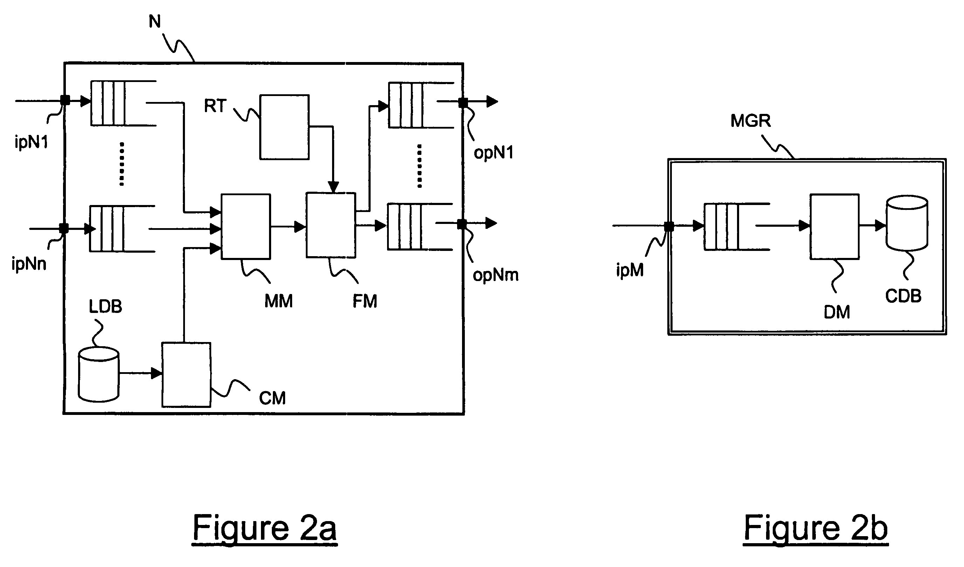

Figure 2a schematically shows the structure of any of nodes NA, NB of Figure 1 (generically termed N) according to the present invention.

The node N comprises n input ports ipN1, ... ipNn. The node N further preferably comprises a local database LDB, which is connected to a compression module CM. The input ports ipN1, ... ipNn and the compression module are connected to a merging module MM. The merging module MM and a routing table RT are preferably connected to a forwarding module FM, which is in turn connected to m output ports opN1, ... opNm.

Figure 2b schematically shows an exemplifying structure of the network manager MGR of Figure 1 according to the present invention.

The network manager MGR preferably comprises at least an input port (Figure 2b only shows a single input port ipM), a decompression module DM and a centralised database CDB.

The node N and the network manager MGR may comprise further modules and input/output ports, which are not shown into the Figures, as they are not relevant to the present description.

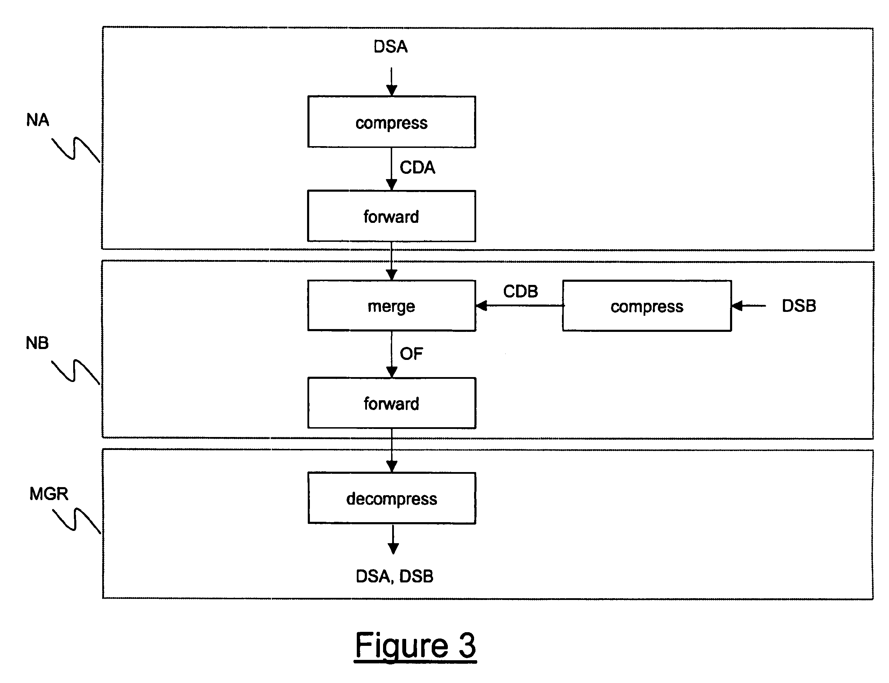

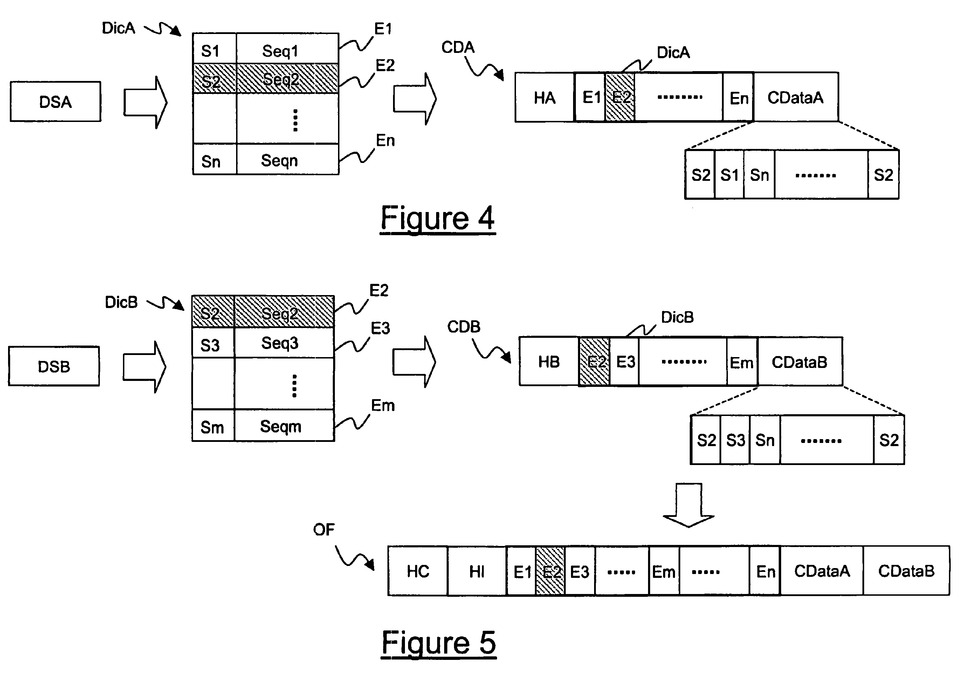

By making reference to Figure 3, the method of collecting data into the network of Figure 1 according to the present invention will now be briefly described. Greater details about the operations performed by each node will be given herein after by referring to Figures 4 and 5.

For instance, it is assumed that the network manager MGR has to perform a backup of the local databases LDB of the nodes NA and NB of the network of Figure 1. For this purpose, the network manager MGR has to collect from each node NA, NB a respective data set DSA, DSB, each data set DSA, DSB comprising a copy of the local database content of the respective node NA, NB.

According to the present invention, the node NA firstly compresses its own data set DSA and inserts it into a file CDA, together with a header and other information for data decompression, as it will be explained in greater detail herein after. Then, the node NA forwards the file CDA to the node NB.

Similarly, according to the present invention, the node NB compresses its own data set DSB and inserts it into a file CDB, together with a header and other information for data decompression.

Then, the node NB merges its own file CDB with the file CDA received from NA, as it will be explained in greater detail herein after, thus obtaining an overall file OF. Data of files CDA, CDB may be not contiguous within the overall file OF. The structure of files CDA, CDB and OF will be described in greater details herein after.

The node NB then forwards the overall file OF to the network manager MGR, which decompresses the overall file OF, and recovers the data sets DSA, DSB.

A node performing only compression of its own data set, in the following description and in the claims, will be termed "collecting node". Besides, a node performing both compression of its own data set and merging of its own file and at least a file received from another node will be termed "intermediate node". Thus, in the network of Figure 1, NA is a collecting node, while NB is an intermediate node.

With reference to Figure 4, the operation of the collecting node NA according to the present invention will be now described in greater detail.

According to the present invention, the node NA reads from its local database the data set DSA, and it compresses it through its own compression module CM.

In a preferred embodiment of the present invention, the compression module CM implements a compression algorithm with dictionary. Such compression algorithms with dictionary are known in the art. They associate a symbol to frequent or long byte sequences, and they build a dictionary, i.e. a table wherein each entry biunivocally associates a symbol to a respective byte sequence.

Preferably, according to the invention, the compression algorithm with dictionary is able to recognise (i.e. to associate to a single symbol) long byte sequences, which possibly correspond to a whole data set. A suitable algorithm is, for instance, a LZMA compression algorithm. Such a type of compression algorithm allows to reach particularly high compression rates.

The compression algorithm thus builds a dictionary DicA with n entries E1, E2, ... En, wherein each entry biunivocally associates a byte sequence Seq1, Seq2, ..., Seqn of the data set DSA to a respective symbol S1, S2, ..., Sn.

Though not shown in Figure 4, the compression algorithm with dictionary may also associate a single symbol to a sequence of symbols which is particularly long or frequent. For instance, if the symbol sequence "S1, S2" is repeated more than once in the data set DSA, it can be replaced by a single symbol Sk. This allows to compress a whole data set in a single symbol. Therefore, in Figure 4, reference signs Seq1, Seq2, .., Seqn indicate either a byte sequence or a symbol sequence.

Once dictionary DicA has been built, the compression module of the node NA replaces each sequence Seq1, Seq2, ..., Seqn of the data set DSA with each respective symbol S1, S2, ..., Sn, thus obtaining a compressed data set CDataA. Again, it is remarked that the compressed data set CDataA may be formed by few symbols, or even by a single symbol.

The node NA then creates a file CDA, comprising a header HA, the entries E1, E2, ..., En of the dictionary DicA and the compressed data set CDataA.

According to present invention, the header HA may comprise one or more of the following parameters:
- source node identifier;
- network manager identifier. In a preferred embodiment of the present invention, such a network manager identifier is the IP address of the network manager, as it will be explained herein after;
- data set name;
- update version;
- base version;
- list of symbols S1, S2, .., Sn of the dictionary DicA;
- compressed data set offset; and
- compressed data set size (expressed in words).

According to the routing table RT, the forwarding module FM of the node NA determines the output port through which the file CDA must be forwarded. According to a preferred embodiment of the present invention, the network manager identifier is its IP address. Thus, the routing table RT is an IP routing table.

It is known that a routing table indicates, for each IP address range, the output port towards which data addressed to a node whose IP address is comprised within such a range must be forwarded. By referring to Figure 1, the IP address of the network manager MGR belongs to the IP address range associated to the only output port opA. Thus, the file CDA is sent to the node NB through such an output port opA.

Figure 5 schematically shows the operation of the intermediate node NB according to the present invention.

The intermediate node NB receives the file CDA from the node NA through its input port ipB. Furthermore, the intermediate node NB reads from its local database LDB its data set DSB, and it compresses it through the same compression algorithm with dictionary used by NA. Thus, the intermediate node NB builds a dictionary DicB.

The dictionary DicB comprises m entries E2, E3, .... Em. It must be noticed that also in DicB, each sequence Seq2, Seq3, ..., Seqm may be either a byte sequence or a symbol sequence.

Some entries may be comprised both in DicA and in DicB; other entries may be comprised only in DicA, other entries may be comprised only in DicB. For instance, in the example of Figures 4 and 5, the entry E1 is comprised only in DicA; the entry E2 is comprised both in DicA and in DicB; the entry E3 is comprised only in DicB. The other entries are omitted for simplicity.

By using the dictionary DicB, the node NB compresses the data set DSB, i.e. it replaces each sequence Seq2, Seq3, ..., Seqm with the respective symbol S2, S3, ..., Sm, thus obtaining a compressed data set CDataB. Again, it is remarked that the compressed data set CDataB may be formed by few symbols, or even by a single symbol.

The intermediate node NB then builds a file CDB, whose structure (shown in Figure 5) is similar to the structure of the file CDA. The file CDB comprises a header HB, the entries E2, E3, ..., Em of the dictionary DicB and the compressed data set CDataB. The content of the header HB is preferably similar to the content of the above header HA.

The Applicant has observed that data sets from nodes of a same telecommunication network sometimes exhibit a strong correlation, i.e. they may contain many identical byte sequences. The Applicant has thus observed that forwarding separately two substantially identical files to the network manager would imply a waste of bandwidth. The Applicant has noticed that bandwidth could be saved by decompressing the file CDA at the node NB, and by applying the application algorithm to the whole of the data sets DSA, DSB, thus minimising the overall size of the data to be forwarded to the network manager.

Besides, the Applicant has noticed that there exist constraints on the overall collection data time in a telecommunication network. Such constraints are generally defined by the standards relative to a telecommunication network management. Thus, the Applicant has perceived that it is preferable to adopt an "intermediate solution", which allows to comply with both bandwidth constraints and with data collection time constraints.

More particularly, the Applicant has perceived that, using a compression algorithm with dictionary, different files from different nodes can be merged without decompressing the single compressed data set.

More particularly, according to a preferred embodiment of the present invention, the node NB builds an overall file OF without decompressing CDA and CDB. Such a file OF, according to the present invention, comprises the two headers HA, HB and the compressed data sets CDataA, CDataB. As for the dictionaries DicA, DicB, the Applicant has perceived that, thanks to the possible correlation between the data sets DSA, DSB, the dictionaries DicA, DicB may comprise several common entries. In many applications, the dictionaries DicA and DicB substantially comprise the same entries. According to the present invention, the two dictionaries DicA, DicB are not separately inserted into the overall file OF, but they are merged before being inserted, i.e. the intermediate node NB inserts only once into the file OF all the entries comprised at least in one of the dictionaries DicA, DicB.

In the following description and in the claims, this latter operation will be referred to with the expression "merging two (or more than two) dictionaries", which means that, according to the present invention, the merging module MM of an intermediate node, in order to merge its own file with one or more files received from another node, actually merges the dictionaries of such files, by inserting into the file OF all the entries belonging to at least one of the dictionaries to be merged.

Then, according to the present invention, entries which are comprised in more than one dictionary, which are possibly the greater part of the entries, are sent to the network manager only once. This is particularly advantageous for instance when data sets DSA, DSB are substantially identical. In this case, the dictionaries DicA, DicB are substantially identical. Therefore, instead of transmitting separately two dictionaries which are substantially identical, the intermediate node NB sends a single dictionary, which comprises the entries of both dictionaries DicA and DicB.

Therefore, in Figure 5, it can be seen that the overall file OF comprises, in addition to the headers HA, HB and to the compressed data sets CDataA, CDataB, a sequence of entries E1, E2, E3, ... Em, ..., En (where m is supposed to be lower than n). In particular, it can be noticed that such a sequence comprises all the entries of the dictionary DicA and all the entries of the dictionary DicB, wherein common entries are inserted into the overall file OF only once (as it can be seen in Figure 5 with reference to the common entry E2).

Therefore, the overall file OF size is particularly reduced in comparison with the sum of the size of single compressed files CDA, CDB, as the size of each compressed file CDA, CDB is mainly due to the dictionary size therein comprised.

The Applicant has performed some tests by applying a LZMA compression algorithm (Lempel-Ziv-Markov chain-Algorithm) upon different data sets.

The Applicant has noticed that the compression efficiency increases by increasing the number of merged data sets, in particular if such data sets are substantially equal, i.e. if they exhibit a strong correlation. For instance, by merging different copies (two, three or four) of a same data set, the overall file OF size is substantially independent from the number of merged copies.

Therefore, as the node NB is able to merge the two files CDA, CDB without decompressing the received file CDA, the processing time required by the node NB is only due to the fact that the node NB, before merging, has to wait the complete reception of the file CDA. This advantageously results in processing times at node NB which are extremely reduced.

As already mentioned, after creating the overall file OF, the node NB, according to its routing table RT, determines the output port through which the overall file OF must be forwarded. Into the network of Figure 1, there is only a single output port, which connects the node NB to the network manager MGR. Therefore, the node NB forwards the overall file OF to the network manager MGR.

Upon reception of the overall file OF, the network manager decompresses it by using the entries E1, E2, E3, ..., Em, ...En comprised into the file OF, recovers the data sets DSA, DSB, and stores them into its centralised database CDB.

The network of Figure 1 comprises only two nodes, and the path that the files can follow across the network is unique. However, it has to be noticed that, in networks with a higher number of nodes arranged according to a more complex topology, the path followed by data while performing data collection according to the present invention is preferably dynamically established hop-by-hop by each intermediate node, according to information comprised into its respective routing table and according to additional information such as traffic information, number and position of the collecting nodes, CPU usage percentage, memory availability, etc, so that Quality of Service requirements of the network can be accomplished.

Therefore, according to the present invention, preferably, all the network nodes are able to act both as collecting nodes and as intermediate nodes, i.e. all the network nodes comprise a merging module MM. This advantageously allows to have maximum flexibility in optimising a data collection in a network.

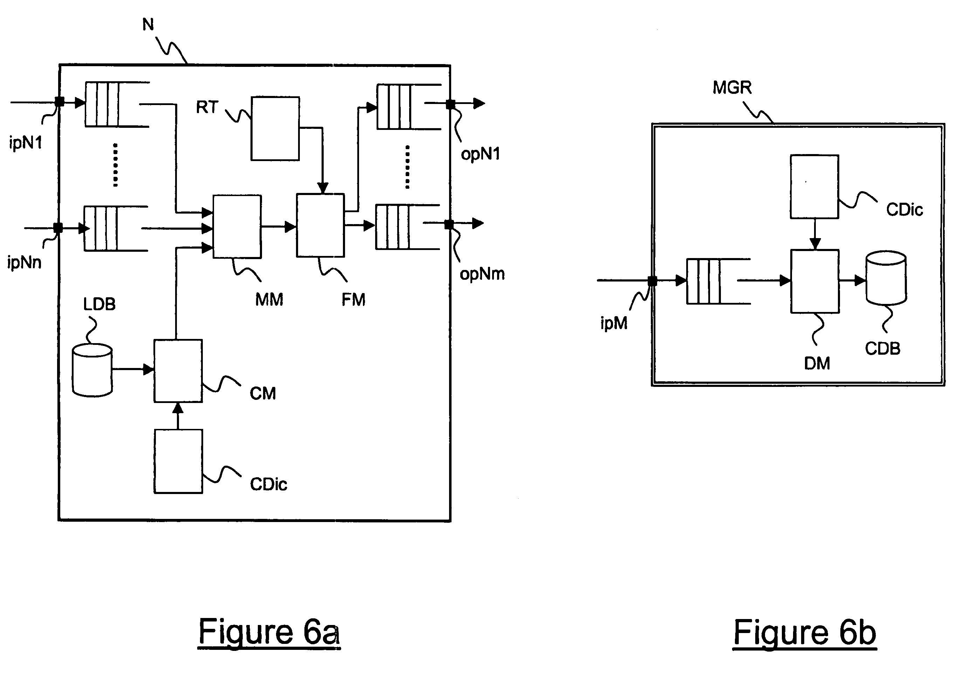

Figures 6a and 6b schematically show the structure of a node N (which may be either node NA or node NB) and of the network manager MGR of the network of Figure 1, according to an advantageous embodiment of the present invention.

According to such an advantageous embodiment, a common dictionary, which comprises symbols that are most frequent into the data sets to be collected, is stored at each intermediate or collecting node of the network and also at the network manager, so that entries comprised into such a common dictionary do not need to be transmitted inside the overall file OF across the network each time a data collection is performed.

By still referring to Figure 4, for instance, it is assumed that, among the different symbols S1, S2, ... Sn, the symbol S2 (whose entry E2 is dashed in Figure 4) is particularly frequent into the data sets that the network manager MGR usually collects from the nodes NA, NB. Such a symbol S2 is then inserted into a common dictionary CDic.

The common dictionary CDic, according to the present invention, is stored both at the network manager MGR and at each node NA, NB. Therefore, the network manager MGR has a common dictionary Cdic. The decompression module DM uses such a common dictionary for decompressing and recovering the data sets. Also each node N shown in Figure 6a stores a copy of the common dictionary CDic, which the compression module CM uses for compressing data sets.

In particular, the decompression module DM of the network manager MGR is adapted to merge the entries of the common dictionary CDic with the entries extracted from the overall file OF, so that it has all the entries required for decompressing the received file OF.

This advantageously allows to further reduce the overall file size. Indeed, according to this preferred embodiment, the file OF does not comprise all the entries E1, E2, E3, ... Em, ... En of the dictionaries DicA, DicB, but only the entries which are not included into the common dictionary. Therefore, the time for transmitting the overall file OF to the network manager is reduced, thus allowing to further reduce the overall data collection time in a telecommunication network.

As already mentioned, the method according to the present invention may be applied also to networks with different topologies and with an arbitrary number of nodes.

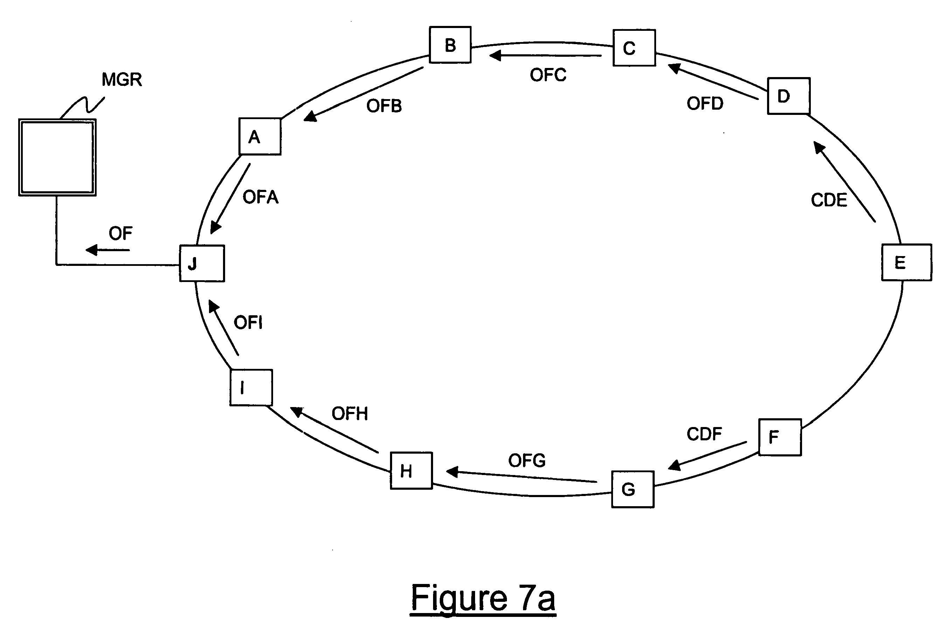

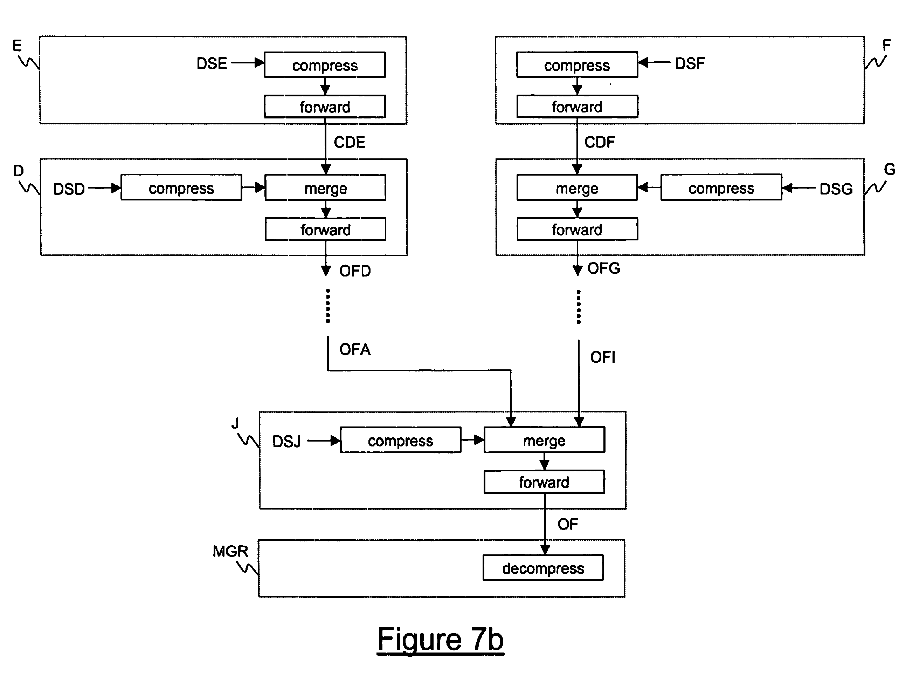

Figure 7a shows an exemplary ring network with nine nodes A, B, C ...J. Each node has a structure as shown in Figure 2a or in Figure 6a. The application of the method of the invention to the exemplary network of Figure 7a will now be described by referring to Figure 7b.

It is assumed that the network manager MGR has to perform a backup of the local databases of all the nodes A, B, C ...J of the ring network of Figure 7a.

According to the present invention, the node E compresses its own data set DSE and inserts it in a file CDE together with header and dictionary, as described above with reference to Figure 1.

The node E may then decide whether to forward its file CDE to the node D or to the node F, according to its routing table. It is assumed that the node E decides to forward its file CDE to the node D.

The node D, upon reception of the file CDE from E, compresses its own data set DSD, it inserts it in a file CDD (not shown), it merges the file CDD with the file CDE received from E, and it forwards the overall file OFD to the following node, which is node C.

And so on, until node A. Node A merges its own file CDA with the overall file OFB received from node B, which comprises the merged files of nodes B-E, thus obtaining an overall file OFA. The node A forwards the file OFA to the node J.

The same happens starting from node F, through the nodes F, G, H, I.

Node J, upon reception of the overall file OFA from node A and an overall file OFI from node I, merges OFA, OFI and its file CDJ, which comprises its compressed data set DSJ, thus obtaining an overall file OF. Node J then forwards the overall file OF to the network manager MGR.

The network manager MGR decompresses the file OF, and stores the data sets of the nodes A, B, ... J in its centralised database.

Then, it can be noticed that in the ring network of Figure 7a, nodes E and F are collecting nodes, while all the other nodes are intermediate nodes.

Therefore, the method of the invention advantageously allows to reduce the data collection time from the nodes of a telecommunication network, for the following reasons.

Firstly, compressing data sets before forwarding them allows to send, for a given bandwidth of the management channel, a higher number of data sets, and thus it allows to collect data at a higher speed in comparison with the prior art. By using a compression algorithm with dictionary, compression becomes particularly efficient. Moreover, merging different compressed data sets according to the present invention allows to obtain a very high compression rate.

Moreover, each intermediate node is able to merge its own file with files received from other nodes without performing decompression. Therefore, processing time required by each intermediate node mainly depends on the reception time of files from other nodes, which is very low in comparison with decompression/compression time, thus resulting is a particularly low processing time.

## Claims

1. A method for collecting data from nodes (NA, NB) of a telecommunication network, said network comprising a collecting node (NA) and an intermediate node (NB), **characterised in that** it comprises the following steps, which are performed by said intermediate node (NB):
- receiving from said collecting node (NA) a first file (CDA) comprising at least a first compressed data set (CDataA) and a first dictionary (DicA), said first dictionary (DicA) comprising first entries (E1, E2, ..., En) associating first symbols of said fist compressed data set (CDataA) to respective byte sequences;
- from a data set (DSB) to be collected from said intermediate node (NB) itself, generating a second file (CDB) comprising at least a second compressed data set (CDataB) and a second dictionary (DicB), said second dictionary (DicB) comprising second entries (E2, E3, ..., Em) associating second symbols of said second compressed data set (CDataB) to respective byte sequences;
- inserting said first compressed data set (CDataA) and said second compressed data set (CDataB) into an overall file (OF); and
- merging said first dictionary (DicA) and said second dictionary (DicB) by inserting only once in a merging resulting dictionary entries comprised in at least one of said first dictionary (DicA) and said second dictionary (DicB), said merging resulting dictionary being inserted into said overall file (OF).

2. The method according to claim 1, wherein said step of generating a second file (CDB) comprises a step of generating said second compressed data set (CDataB) by using at least one of said second entries (E2, E3, ..., Em) which is stored in said intermediate node (NB).

3. The method according to any of preceding claims, **characterised in that** it further comprises a step of inserting in said overall file (OF) a first header (HA) including an identifier of said collecting node (NA) and a second header (HB) including an identifier of said intermediate node (NB).

4. The method according to any of preceding claims, **characterised in that** it further comprises a step of forwarding said overall file (OF) according to routing information (RT) stored at said intermediate node (NB).

5. A network node (NB) of a telecommunication network, **characterised in that** it comprises:
- receiving means (ipN1, ... ipNn) for receiving a first file (CDA) comprising at least a first compressed data set (CDataA) and a first dictionary (DicA), said first dictionary (DicA) comprising first entries (E1, E2, ..., En) associating first symbols of said first compressed data set (CDataA) to respective byte sequences;
- a compression module (CM) for generating, from a data set (DSB) to be collected from said intermediate node (NB) itself, a second file (CDB) comprising at least a second compressed data set (CDataB) and a second dictionary (DicB), said second dictionary (DicB) comprising second entries (E2, E3, ..., Em) associating second symbols of said second compressed data set (CDataB) to respective byte sequences;
- a merging module (MM) for inserting said first compressed data set (CDataA) and said second compressed data set (CDataB) into an overall file (OF), and for merging said first dictionary (DicA) and said second dictionary (DicB) in said overall file (OF) by inserting only once in a merging resulting dictionary entries comprised in at least one of said first dictionary (DicA) and said second dictionary (DicB).

6. The network node (NB) according to claim 5, wherein said compression module (CM) is further adapted to generate said second file (CDB) according to at least one of said second entries (E2, E3, ..., Em) which is stored at said network node (NB).

7. The network node (NB) according to any of claims 5 or 6, **characterised in that** said merging module (MM) is further adapted to insert in said overall file (OF) a header (HB) including an identifier of said network node (NB).

8. The network node (NB) according to any of claims 5 to 7, **characterised in that** it further comprises a forwarding module (FM) for forwarding said overall file (OF) according to routing information (RT) stored at said network node (NB).

9. A network manager (MGR) of a telecommunication network, **characterised in that** it comprises:
- receiving means (ipM) for receiving a file (OF) comprising a first compressed data set (CDataA), a second compressed data set (CDataB) and a sequence of dictionary entries (E1, E2, E3, ... Em, ... En) as generated by the compression module (CM) and the merging module (MM) of a network node (NB) according to claim 5, said dictionary entries (E1, E2, E3, ..., Em, ..., En) associating symbols of said first compressed data set (CDataA) and said second compressed data set (CDataB) to respective byte sequences;
- a decompression module (DM) for decompressing said first compressed data set (CDataA) and said second compressed data set (CDataB) according to said sequence of dictionary entries (E1, E2, E3, ... Em, ... En).

10. The network manager (MGR) according to claim 9, wherein said decompression module (DM) is further adapted to decompress said first compressed data set (CDataA) and said second compressed data set (CDataB) according to at least a dictionary entry (E2) which is stored at said network manager (MGR).

11. A telecommunication network comprising a network node according to any of claims 5 to 8, and a network manager according to any of claims 9 or 10.

## Patentansprüche

1. Ein Verfahren zum Sammeln von Daten von Knoten (NA, NB) eines Telekommunikationsnetzwerks, wobei das besagte Netzwerk einen Sammelknoten (NA) und einen Zwischenknoten (NB) einschließt, **dadurch gekennzeichnet, dass** es die folgenden Schritte, welche von dem besagten Zwischenknoten (NB) ausgeführt werden, umfasst:
- Empfangen, von dem besagten Sammelknoten (NA), einer ersten Datei (CDA), welche mindestens einen ersten komprimierten Datensatz (CDataA) und ein erstes Wörterbuch (DicA) enthält, wobei das besagte erste Wörterbuch erste Einträge (E1, E2, ..., En) enthält, welche erste Symbole des besagten ersten komprimierten Datensatzes (CDataA) entsprechenden Bytefolgen zuordnen;
- Erzeugen aus einem Datensatz (DSB), welcher von dem besagten Zwischenknoten (NB) selbst zu erfassen ist, einer zweiten Datei (CDB), welche mindestens einen zweiten komprimierten Datensatz (CDataB) und ein zweites Wörterbuch (DicB) enthält, wobei das besagte zweite Wörterbuch (DicB) zweite Einträge (E2, E3, ..., Em) enthält, welche zweite Symbole des besagten zweiten komprimierten Datensatzes (CDataB) entsprechenden Bytefolgen zuordnen;
- Einfügen des besagten ersten komprimierten Datensatzes (CDataA) und des besagten zweiten komprimierten Datensatzes (CDataB) In eine Gesamtdatei (OF); und
- Zusammenführen des besagten ersten Wörterbuchs (DicA) und des besagten zweiten Wörterbuchs (DicB) durch nur einmaliges Einfügen in ein aus der Zusammenführung entstehendes Wörterbuch der Einträge, welche in mindestens einem der besagten ersten (DicA) und zweiten (DicB) Wörterbücher enthalten sind, wobei das aus der Zusammenführung entstehende Wörterbuch in die besagte Gesamtdatei (OF) eingefügt wird.

2. Das Verfahren nach Anspruch 1, wobei der besagte Schritt des Erzeugens einer zweiten Datei (CDB) einen Schritt des Erzeugens des besagten zweiten komprimierten Datensatzes (CDataB) durch Verwenden von mindestens einem der besagten zweiten Einträge (E2, E3, ..., Em), welcher in dem besagten Zwischenknoten (NB) gespeichert ist, umfasst.

3. Das Verfahren nach einem beliebigen der vorstehenden Ansprüche, **dadurch gekennzeichnet, dass** es weiterhin einen Schritt des Einfügens eines ersten Kopfteils (HA), welcher eine Kennung des besagten Sammelknotens (NA) enthält, und eines zweiten Kopfteils (HB), welcher eine Kennung des besagten Zwischenknotens (NB) enthält, in die besagte Gesamtdatei (OF) umfasst.

4. Das Verfahren nach einem beliebigen der vorstehenden Ansprüche, **dadurch gekennzeichnet, dass** es weiterhin einen Schritt des Weiterleitens der besagten Gesamtdatei (OF) gemäß an dem besagten Zwischenknoten (NB) gespeicherten Routinginformationen (RT) umfasst.

5. Ein Netzwerkknoten (NB) eines Telekommunikationsnetzwerks, **dadurch gekennzeichnet, dass** er umfasst:
- Empfangsmittel (ipN1, ... ipNn) zum Empfangen einer ersten Datei (CDA), welche mindestens einen ersten komprimierten Datensatz (CDataA) und ein erstes Wörterbuch (DicA) enthält, wobei das besagte erste Wörterbuch erste Einträge (E1, E2, ..., En) enthält, welche erste Symbole des besagten ersten komprimierten Datensatzes (CDataA) entsprechenden Bytefolgen zuordnen;
- ein Komprimierungsmodul (CM) zum Erzeugen aus einem Datensatz (DSB), welcher von dem besagten Zwischenknoten (NB) selbst zu erfassen ist, einer zweiten Datei (CDB), welche mindestens einen zweiten komprimierten Datensatz (CDataB) und ein zweites Wörterbuch (DicB) enthält, wobei das besagte zweite Wörterbuch (DicB) zweite Einträge (E2, E3, ..., Em) enthält, welche zweite Symbole des besagten zweiten komprimierten Datensatzes (CDataB) entsprechenden Bytefolgen zuordnen;
- ein Zusammenführungsmodul (MM) zum Einfügen des besagten ersten komprimierten Datensatzes (CDataA) und des besagten zweiten komprimierten Datensatzes (CDataB) in eine Gesamtdatel (OF), und zum Zusammenführen des besagten ersten Wörterbuchs (DicA) und des besagten zweiten Wörterbuchs (DicB) in der besagten Gesamtdatei (OF) durch nur einmaliges Einfügen der Einträge, welche in mindestens einem der besagten ersten (DlcA) und zweiten (DicB) Wörterbücher enthalten sind, in ein aus der Zusammenführung entstehendes Wörterbuch.

6. Der Netzwerkknoten (NB) nach Anspruch 5, wobei das besagte Komprimierungsmodul (CM) weiterhin fähig ist, die besagte zweite Datei (CDB) gemäß mindestens einem der besagten zweiten Einträge (E2, E3, ..., Em), welche an dem besagten Netzwerkknoten (NB) gespeichert sind, zu erzeugen.

7. Der Netzwerkknoten (NB) nach einem beliebigen der Ansprüche 5 oder 6, **dadurch gekennzeichnet, dass** das besagte Zusammenführungsmodul (MM) weiterhin fähig ist, einen Kopfteil (HB), welcher eine Kennung des besagten Netzwerkknotens (NB) enthält, in die besagte Gesamtdatei (OF) einzufügen.

8. Der Netzwerkknoten (NB) nach einem beliebigen der Ansprüche 5 bis 7, **dadurch gekennzeichnet, dass** er weiterhin ein Weiterleitungsmodul (FM) zum Weiterleiten der besagten Gesamtdatei (OF) gemäß den an dem besagten Netzwerkknoten (NB) gespeicherten Routinginformationen (RT) umfasst.

9. Ein Netzwerkverwalter (MGR) eines Telekommunikationsnetzwerks, **dadurch gekennzeichnet, dass** er umfasst:
- Empfangsmittel (ipM) zum Empfangen einer Datei (OF), welche einen ersten komprimierten Datensatz (CDataA), einen zweiten komprimierten Datensatz (CDataB) und eine Folge von Wörterbucheinträgen (E1, E2, E3, ... Em, ... En), wie sie von dem Komprlmierungsmodul (CM) erzeugt wurden, und das Zusammenführungsmodul (MM) eines Netzwerkknotens (NB) gemäß Anspruch 5 enthält, wobei die besagten Wörterbucheinträge (E1, E2, E3, ... Em, ... En) Symbole des besagten ersten komprimierten Datensatzes (CDataA) und des besagten zweiten komprimierten Datensatzes (CDataB) entsprechenden Bytefolgen zuordnen;
- ein Dekomprimlerungsmodul (DM) zum Dekomprimieren des besagten ersten Datensatzes (CDataA) und des besagten zweiten Datensatzes (CDataB) gemäß der besagten Folge von Wörterbucheinträgen (E1, E2, E3, ... Em, ... En).

10. Der Netzwerkverwalter (MGR) nach Anspruch 9, wobei das besagte Dekomprimierungsmodul (DM) weiterhin fähig ist, den besagten ersten Datensatz (CDataA) und den besagten zweiten komprimierten Datensatz (CDataB) gemäß mindestens einem an dem besagten Netzwerkverwalter (MGR) gespeicherten Wörterbucheintrag (E2) zu dekomprimieren.

11. Ein Telekommunikationsnetzwerk mit einem Netzwerkknoten gemäß einem beliebigen der Ansprüche 5 bis 8, und einem Netzwerkverwalter gemäß einem beliebigen der Ansprüche 9 oder 10.

## Revendications

1. Procédé de collecte de données à partir des noeuds (NA, NB) d'un réseau de télécommunications, ledit réseau comprenant un noeud de collecte (NA) et un noeud intermédiaire (NB), **caractérisé en ce qu'**il comprend les étapes suivantes, qui sont exécutées par ledit noeud intermédiaire (NB) :
- recevoir à partir dudit noeud de collecte (NA) un premier fichier (CDA) comprenant au moins un premier ensemble de données compressées (CDataA) et un premier dictionnaire (DicA), ledit premier dictionnaire (DicA) comprenant les premières entrées (E1, E2, ..., En) associant les premiers symboles dudit premier ensemble de données compressées (CDataA) aux séquences d'octets respectives ;
- à partir d'un ensemble de données (DSB) devant être collectées à partir dudit noeud intermédiaire (NB) lui-même, créer un deuxième fichier (CDB) comprenant au moins un deuxième ensemble de données compressées (CDataB) et un deuxième dictionnaire (DicB), ledit deuxième dictionnaire (DicB) comprenant les deuxièmes entrées (E2, E3, ..., Em) associant les deuxièmes symboles dudit deuxième ensemble de données compressées (CDataB) aux séquences d'octets respectives ;
- insérer ledit premier ensemble de données compressées (CDataA) et ledit deuxième ensemble de données compressées (CDataB) dans un fichier global (OF) ; et
- faire fusionner ledit premier dictionnaire (DicA) et ledit deuxième dictionnaire (DicB) en n'insérant qu'une fois dans un dictionnaire de fusion résultant des entrées comprises dans au moins un parmi ledit premier dictionnaire (DicA) et ledit deuxième dictionnaire (DicB), ledit dictionnaire de fusion résultant étant inséré dans ledit fichier global (OF).

2. Procédé selon la revendication 1, dans lequel ladite étape de création d'un deuxième fichier (CDB) comprend une étape de création dudit deuxième ensemble de données compressées (CDataB) en utilisant au moins une desdites deuxièmes entrées (E2, E3, ..., Em) qui est stockée dans ledit noeud intermédiaire (NB).

3. Procédé selon l'une quelconque des revendications précédentes, **caractérisé en ce qu'**il comprend en outre une étape d'insertion dans ledit fichier global (OF) d'un premier en-tête (HA) comprenant un identifiant dudit noeud de collecte (NA) et d'un deuxième en-tête (HB) comprenant un identifiant dudit noeud intermédiaire (NB).

4. Procédé selon l'une quelconque des revendications précédentes, **caractérisé en ce qu'**il comprend en outre une étape d'acheminement dudit fichier global (OF) conformément à des informations de routage (RT) stockées dans ledit noeud intermédiaire (NB).

5. Noeud de réseau (NB) d'un réseau de télécommunications, **caractérisé en ce qu'**il comprend :
- moyens de réception (ipN1, ... ipNn) pour recevoir un premier fichier (CDA) comprenant au moins un premier ensemble de données compressées (CDataA) et un premier dictionnaire (DicA), ledit premier dictionnaire (DicA) comprenant les premières entrées (E1, E2, ..., En) associant les premiers symboles dudit premier ensemble de données compressées (CDataA) aux séquences d'octets respectives ;
- module de compression (CM) pour créer, à partir d'un ensemble de données (DSB) devant être collectées à partir dudit noeud intermédiaire (NB) lui-même, un deuxième fichier (CDB) comprenant au moins un deuxième ensemble de données compressées (CDataB) et un deuxième dictionnaire (DicB), ledit deuxième dictionnaire (DicB) comprenant les deuxièmes entrées (E2, E3, ..., Em) associant les deuxièmes symboles dudit deuxième ensemble de données compressées (CDataB) aux séquences d'octets respectives ;
- module de fusion (MM) pour insérer ledit premier ensemble de données compressées (CDataA) et ledit deuxième ensemble de données compressées (CDataB) dans un fichier global (OF), et pour faire fusionner ledit premier dictionnaire (DicA) et ledit deuxième dictionnaire (DicB) dans ledit fichier global (OF) en n'insérant qu'une fois dans un dictionnaire de fusion résultant des entrées comprises dans au moins un parmi ledit premier dictionnaire (DicA) et ledit deuxième dictionnaire (DicB).

6. Coud de réseau (NB) selon la revendication 5, dans lequel ledit module de compression (CM) est en outre adapté pour créer ledit deuxième fichier (CDB) conformément au moins à une desdites deuxièmes entrées (E2, E3, ..., Em) qui est stockée dans ledit noeud de réseau (NB).

7. Noeud de réseau (NB) selon l'une quelconque des revendications 5 ou 6, **caractérisé en ce que** ledit module de fusion (MM) est en outre adapté pour Insérer dans ledit fichier global (OF) un en-tête (HB) comprenant un identifiant dudit noeud de réseau (NB).

8. Noeud de réseau (NB) selon l'une quelconque des revendications 5 à 7, **caractérisé en ce qu'**il comprend en outre un module d'acheminement (FM) pour acheminer ledit fichier global (OF) conformément aux informations de routage (RT) stockées dans ledit noeud de réseau (NB).

9. Gestionnaire de réseau (MGR) d'un réseau de télécommunications, **caractérisé en ce qu'**il comprend :
- moyens de réception (ipM) pour recevoir un fichier (OF) comprenant un premier ensemble de données compressées (CDataA), un deuxième ensemble de données compressées (CDataB) et une séquence d'entrées de dictionnaire (E1, E2, E3, ... Em, ... En) tels que créés par le module de compression (CM) et le module de fusion (MM) d'un noeud de réseau (NB) selon la revendication 5, lesdites entrées de dictionnaire (E1, E2, E3, ..., Em, ..., En) associant les symboles dudit premier ensemble de données compressées (CDataA) et dudit deuxième ensemble de données compressées (CDataB) aux séquences d'octets respectives ;
- module de décompression (DM) pour décompresser ledit premier ensemble de données compressées (CDataA) et ledit deuxième ensemble de données compressées (CDataB) conformément à ladite séquence d'entrées de dictionnaire (E1, E2, E3, ... Em, ...En).

10. Gestionnaire de réseau (MGR) selon la revendication 9, dans lequel ledit module de décompression (DM) est en outre adapté pour décompresser ledit premier ensemble de données compressées (CDataA) et ledit deuxième ensemble de données compressées (CDataB) conformément à au moins une entrée de dictionnaire (E2) qui est stockée dans ledit gestionnaire de réseau (MGR).

11. Réseau de télécommunications comprenant un noeud de réseau selon l'une quelconque des revendications 5 à 8, et un gestionnaire de réseau selon l'une quelconque des revendications 9 ou 10.
